# FASCICULE DE BREVET EUROPEEN

(11) **EP 1 335 838 B1**
(45) Date de publication et mention de la délivrance du brevet: **13.10.2004**
(21) Numéro de dépôt: 01993551.9
(22) Date de dépôt: 02.11.2001
(51) Int. Cl.: B60C 23/04

(54) **INSERT DE SECURITE AVEC ANTENNE DE TRANSMISSION INCORPOREE**
SICHERHEITSEINSATZ MIT EINGEBAUTER ÜBERTRAGUNGSANTENNE
SAFETY INSERT WITH INCORPORATED TRANSMISSION ANTENNA

(30) Priorité: 13.11.2000 FR 0014678
(43) Date de publication de la demande: 20.08.2003
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: BOULOT, Jean-Francis, F-63430 Pont du Château (FR)
(74) Mandataire: Dequire, Philippe
(86) Numéro de dépôt international: PCT/EP2001/012692
(87) Numéro de publication internationale: WO 2002/038400

(56) Documents cités:
- EP-A- 0 775 601
- WO-A-00/07834
- US-A- 5 541 574

## Description

L'invention concerne les systèmes de transmission d'informations, notamment de nature technique, d'une partie rotative vers une partie non rotative d'un véhicule. Il peut s'agir d'informations concernant des paramètres physiques tels la pression, la température, le frottement, l'usure, etc. L'invention concerné plus particulièrement les modules de roue et les antennes de ces systèmes et leur mise en place sur les roues des véhicules.

En particulier, l'invention est utilisée avec un système de sécurité destiné à avertir les conducteurs des véhicules lors d'une perte de pression de l'un des pneumatiques de leur véhicule.

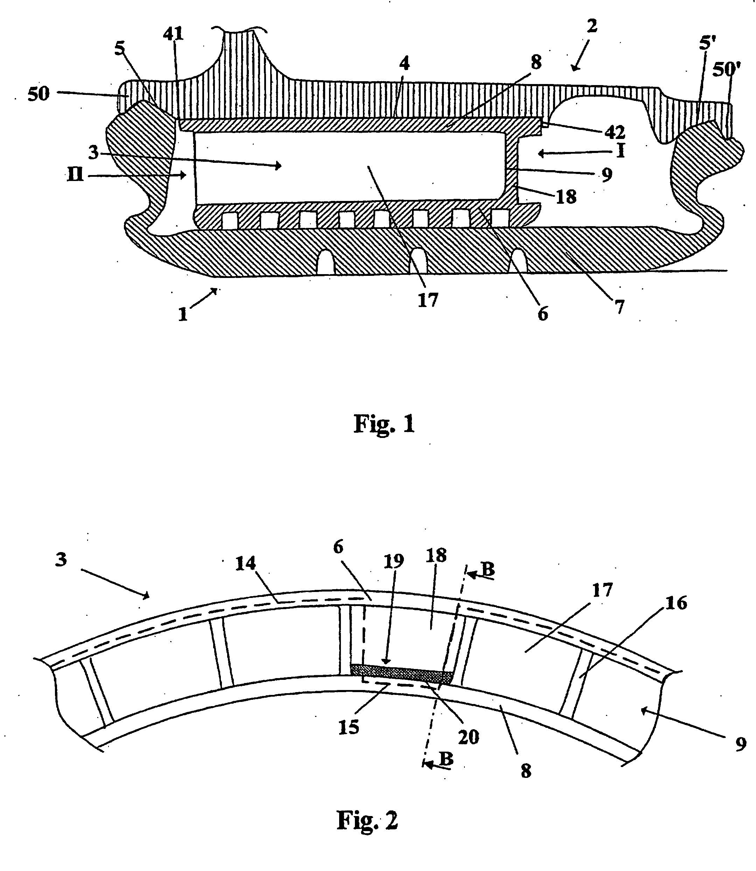

Le document WO 94/20 317 présente un système comportant pour chaque roue un module de roue avec au moins un capteur de pression, des moyens d'alimentation en énergie, un émetteur haute fréquence et une antenne. Comme l'indique la figure 2, ce module de roue est fixé à la valve de la roue. Une telle fixation peut, notamment lorsque le trou de valve n'est pas disposé dans le flanc extérieur de la gorge de montage du pneumatique (voir par exemple la roue divulguée par le brevet EP 701 911), entraîner des problèmes lors du montage ou du démontage des pneumatiques sur les roues : il est nécessaire de suivre un procédé de montage/démontage spécifique pour tenir compte de la présence du module de roue et toute inattention peut se traduire par un endommagement ou une destruction des modules.

Le brevet US 5,285,189 présente un système avec des modules de roue fixés (voir figure 1) à la paroi radialement extérieure des gorges de montage des roues par un collier de fixation. Ce mode de fixation limite les problèmes lors du montage des pneumatiques sur leurs roues. Toutefois, on constate que le module peut pivoter lors du roulage des véhicules. Leur position n'est donc pas connue lors du démontage des pneumatiques et là aussi toute inattention peut entraîner un endommagement ou une destruction des modules. Les modules sont, d'autre part, disposés à proximité immédiate de la paroi métallique des jantes des roues, cet environnement rend difficile la fiabilité des transmissions radio entre les modules de roue et les unités centrales de réception et de traitement disposées dans le châssis des véhicules.

Le brevet EP0 775 601, correspondant au préambule de la revendication 1, divulgue un système de sécurité pour des roues équipées d'inserts de sécurité avec des modules de roue disposés à l'intérieur du volume de l'insert de sécurité. On constate avec un tel système qu'il peut encore exister des difficultés de rendement des transmissions radio, notamment lors de certaines positions du module de roue à transmission radio relativement au châssis du véhicule.

L'invention a pour objet un insert de sécurité selon la revendication 1.

Dans un mode de réalisation avantageux, le module de roue étant à transmission radio et comportant un émetteur radio connecté à une bobine de couplage magnétique, l'antenne comporte une bobine de couplage magnétique disposée à proximité du logement du module de roue.

Ce mode de réalisation a l'avantage de permettre d'obtenir un couplage magnétique serré entre les deux bobines de couplage de l'antenne et du module de roue lorsque le module de roue est placé dans son logement. Cela permet d'utiliser une antenne de longueur importante, donc avec un excellent rendement bien supérieur à celui que l'on peut attendre des antennes de taille compatible avec celle des boîtiers des modules de roue couramment utilisés. Un autre avantage est l'absence de contact électrique entre l'antenne et l'émetteur du module de roue.

De préférence, l'antenne est une antenne accordée de haut rendement. Cette antenne peut s'étendre sur une fraction seulement de la circonférence de l'insert. On choisit alors aisément la longueur du conducteur constituant l'antenne pour l'accorder. L'antenne peut aussi s'étendre sur l'ensemble de la circonférence de l'insert. Cela a l'avantage de faciliter la transmission des informations entre le module de roue et une .unité centrale de réception et de traitement disposée dans le châssis du véhicule.

Il est particulièrement avantageux de disposer, pour sa plus grande part, l'antenne à l'intérieur de la partie supérieure du corps annulaire de l'insert dont le diamètre est supérieur au diamètre maximum de la roue destinée à recevoir l'insert.

Cette disposition de l'antenne augmente très sensiblement le rendement de l'antenne. C'est un facteur important pour limiter la consommation en énergie du module de roue lors des transmissions d'informations.

Par exemple, on peut fixer l'antenne dans une gorge annulaire ménagée dans une paroi latérale de la partie supérieure de l'insert.

On peut aussi noyer l'antenne dans cette partie supérieure du corps annulaire.

De préférence, l'antenne et sa bobine de couplage sont constituées par un seul fil conducteur. Cela a l'avantage de faciliter la réalisation de cette antenne et ainsi de limiter le coût de l'ensemble.

Ce conducteur peut être un conducteur souple et extensible.

L'antenne peut être réalisée, au moins en partie, par l'application sur la surface de l'insert d'une peinture conductrice.

Avantageusement, le logement du module de roue est disposée dans le corps annulaire à proximité immédiate de la base de l'insert. Cela a l'avantage de minimiser les risques d'endommagement du module de roue en cas de choc du pneumatique en roulage ou lors d'un fonctionnement en roulage à plat.

L'invention a aussi pour objet un module de roue destiné à être disposé dans un logement à l'intérieur d'un insert de sécurité comportant une base sensiblement circonférentielle destinée à venir en contact avec une jante de roue adaptée, un corps sensiblement circonférentiel destiné à supporter une bande de roulement d'un pneumatique monté sur la jante lors d'un. roulage avec une pression susceptible d'occasionner un affaissement au moins partiel d'une portion du pneumatique, le module comportant un élément susceptible de détecter ou de lire un paramètre physique de la roue ou du pneumatique, tel un capteur de pression, et un émetteur connecté électriquement à une bobine de couplage magnétique adaptée pour coopérer électriquement avec une antenne disposée dans ledit insert.

Plusieurs modes de réalisation de l'invention sont maintenant décrits à l'aide du dessin annexé dans lequel :
- la figure 1 présente une coupe axiale partielle d'un ensemble monté équipé d'un insert de sécurité selon l'invention ;
- la figure 2 présente en vue de côté l'insert de la figure 1 ;
- la figure 3 présente une coupe axiale au niveau du logement d'un module de roue de l'insert de la figure 1 ;
- la figure 4 présente une coupe axiale au niveau du logement d'un module de roue d'un second mode de réalisation d'un insert selon l'invention ; la figure 5 présente une coupe axiale au niveau du logement d'un module de roue d'un troisième mode de réalisation d'un insert selon l'invention ;
- la figure 6 présente une coupe selon la direction A-A tel qu'indiqué à la figure 5 d'un insert selon l'invention ; et
- la figure 7 présente schématiquement. un module de roue selon l'invention.

On voit à la figure 1 un ensemble monté comportant un pneumatique 1, une jante 2 de roue et un insert de sécurité 3 disposé autour de la portée 4 de la jante 2. La géométrie particulière de cette jante 2 de roue est notamment décrite dans le brevet US 5 634 993. Elle présente deux rebords de jante, 50 extérieur et 50' intérieur, deux sièges de bourrelets, 5 extérieur et 5' intérieur, de diamètres différents et une portée 4 avec un bord d'engagement 41 et une butée de blocage 42. Cette jante est particulièrement adaptée pour la mise en place aisée de cet insert de sécurité 3. Cet ensemble permet le roulage malgré une baisse de pression importante dans le pneumatique 1. L'insert de sécurité 3 a une face axialement antérieure I et une face axialement postérieure II. L'insert comprend deux parties principales, une base 8 destinée à venir entourer la portée 4 de la jante 2 et un corps 9 relié à la base 8. Le corps 9 comprend un sommet 6 destiné à venir en contact avec la bande de roulement 7 du pneumatique 1 en cas de pression de gonflage nulle ou très faible - c'est ce qui est représenté à la figure 1. Le corps 9 peut être de formes extrêmement variées.

La figure 2 présente une vue de l'insert 3 prise du côté de la face axialement postérieure II. Le corps 9 de l'insert de sécurité 3 présente une série de cloisons 16 disposées axialement ou sensiblement axialement Ces cloisons sont régulièrement réparties sur la circonférence de l'insert et relient le sommet 6 à la base 8. Ces cloisons constituent avec le voile 18 sensiblement circonférentiel du corps 9 (voir figure 1) des évidements 17. L'un de ces évidements, celui repéré 19, est utilisé pour fixer dans l'insert 3 un module de roue 20. Cette fixation est faite par tout moyen connu, par exemple par enclipsage ou par collage. Le module de roue est de préférence disposé dans la partie radialement inférieure du corps 9 pour limiter les risques d'endommagement en cas de chocs en roulage. Le montage du module de roue est aussi de préférence amovible. A la figure 2, est aussi représenté une antenne 14. Cette antenne s'étend le long de la circonférence de l'insert de part et d'autre du module de roue 20 dans la partie du corps constituant le sommet. L'antenne 14 est électriquement reliée à une bobine de couplage magnétique 15 disposée dans la base 8 de l'insert à proximité immédiate du module de roue 20.

L'antenne 14 peut être constituée d'un seul conducteur ou d'un bobinage circonférentiel selon les cas.

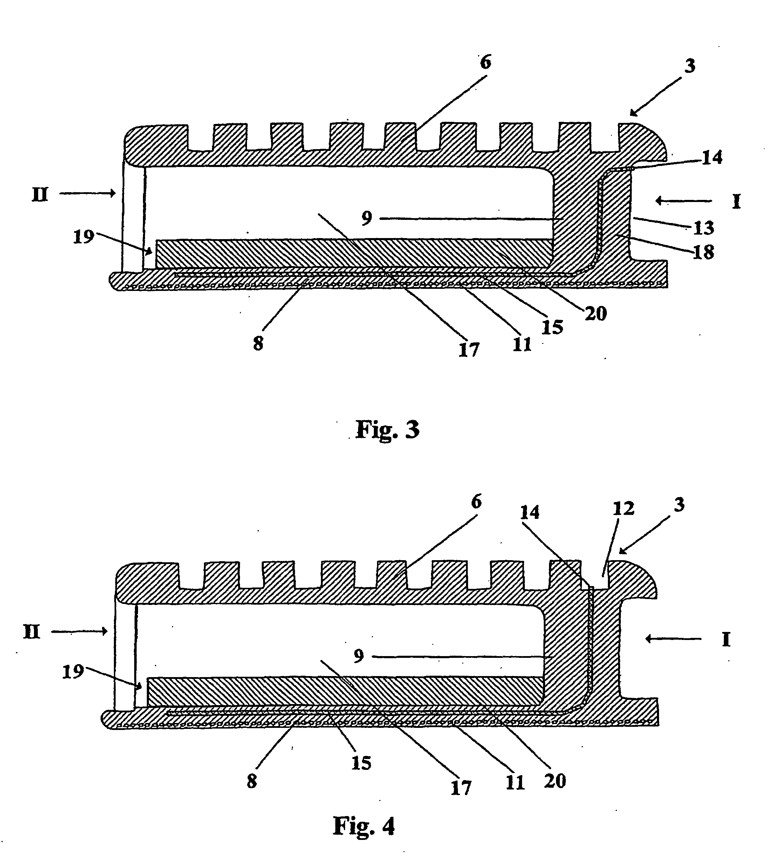

La figure 3 présente une coupe axiale partielle d'un insert de sécurité 3 selon l'invention. Cette coupe est prise au niveau de B-B tel qu'indiqué à la figure 2. L'insert de sécurité 3 comporte de façon optionnelle une série de renforts d'orientation sensiblement circonférentielle 11 disposés dans la base 8 pour faciliter la résistance à la centrifugation de l'insert lors d'un roulage à grande vitesse.

A la figure 3, l'antenne 14 est disposée latéralement le long de la cavité 13 du côté I. La coupe illustre comment l'antenne 14 traverse le voile 18 pour quitter la partie supérieure du corps 9, le sommet 6 pour rejoindre la base 8 et la bobine de couplage 15. Ici, la bobine de couplage est une simple boucle qui s'étend dans la base sous le logement 19 du module de roue 20.

A la figure 4, on voit un mode de réalisation légèrement différent de l'antenne de l'insert 3. Cette antenne 14 s'étend le long de la circonférence de l'insert dans une cavité circonférentielle débouchant radialement du sommet 6. Pour ces deux modes de réalisation, l'antenne peut, dans sa partie débouchante être réalisée avec une peinture conductrice. Dans la partie de liaison avec la boucle de couplage 15, un conducteur extensible ou non est utilisé.

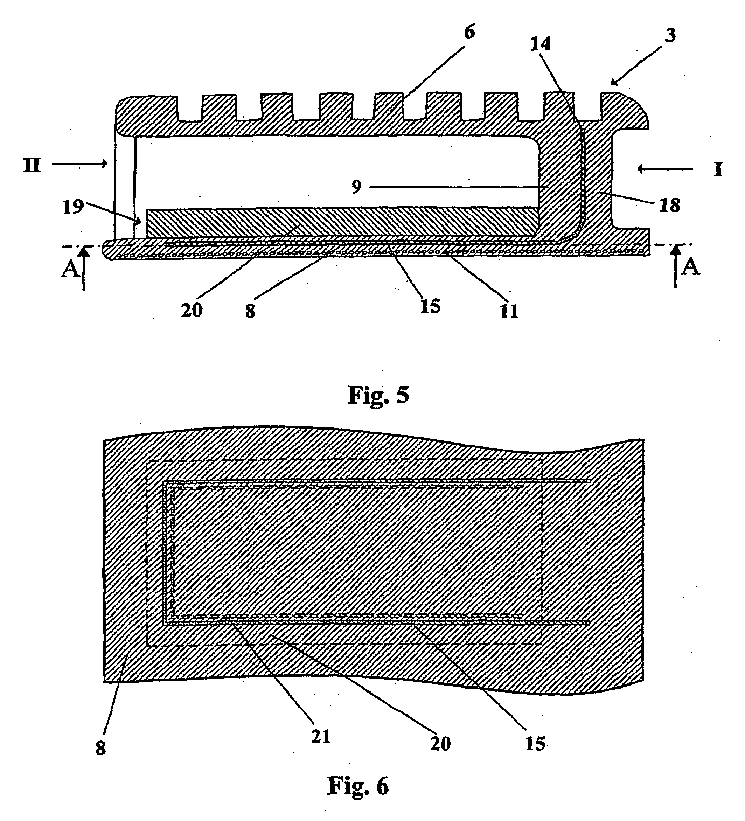

La figure 6 précise la forme de la boucle de couplage magnétique 15 selon l'invention. Cette figure est une coupe circonférentielle selon A-A tel qu'indiqué à la figure 5. Cette coupe est effectuée dans le plan de la boucle de couplage 15. La boucle de couplage magnétique 15 est placée dans la base 8. En traits pointillés, on voit le module de roue disposé contre la surface radialement extérieure de la base 8 avec une boucle de couplage similaire 21 disposée pratiquement parallèlement à la boucle 15. Le couplage magnétique entre ces deux boucles 15 et 21 peut ainsi être excellent dès que le module de roue 20 est placé dans son logement 19.

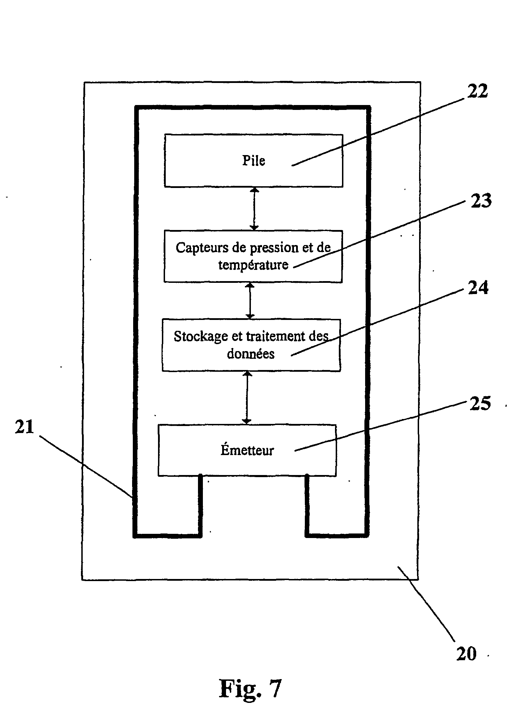

La figure 7 présente schématiquement un module de roue 20. Ce module comprend principalement des moyens d'alimentation en énergie, tels une pile 22, un ensemble de capteurs de pression et de température 23, des moyens de stockage et de traitement des données 24 et un émetteur HF 25. L'émetteur 25 est relié électriquement à une boucle de couplage 21 qui a une forme et une longueur sensiblement comparables à celle de l'antenne disposée de façon solidaire dans l'insert et contribue à l'adaptation d'impédance entre l'émetteur et l'antenne.

Le positionnement d'une antenne solidaire d'un insert de sécurité selon l'invention présente de nombreux avantages. L'antenne et le module de roue sont protégés par l'insert de sécurité pendant les phases de montage et de démontage des pneumatiques ainsi que pendant le roulage. Le module de roue est aisément mis en place de façon amovible ou non dans l'insert. L'antenne a un excellent rendement en raison de sa longueur et de sa position en dehors des zones proches des parties métalliques de la jante qui contribue à augmenter la durée de vie des piles et diminue les problèmes de zones d'ombre de transmission. Lorsque l'antenne s'étend sur toute la circonférence de l'insert, les conditions de réception de l'unité centrale du système de surveillance du véhicule sont sensiblement identiques quelles que soient les positions de la roue concernée. Enfin, si lors d'un entretien du véhicule et des pneumatiques, il y a un oubli de l'insert, le système peut aisément détecter immédiatement cet oubli.

Un insert de sécurité selon l'invention peut être principalement composé de mélanges caoutchouteux ou de matériaux thermoplastiques. Dans les deux cas, on peut réaliser cet insert par injection sous pression du matériau constitutif dans une cavité fermée à partir de points d'alimentation régulièrement disposés. Avant de pratiquer l'injection, il convient de disposer les renforts 11 dans la cavité fermée. La boucle de couplage de l'antenne de l'insert peut être disposée radialement extérieurement sur les renforts 11 avant l'injection. Le reste de l'antenne peut aussi être mis en place par des moyens connus dans la cavité fermée dans le cas où on choisit d'avoir une antenne noyée dans le sommet 6. Ce reste peut aussi être en dehors de la cavité fermée pendant l'injection à l'exception bien entendu de la partie de liaison entre l'antenne et la boucle de couplage qui doit être disposée dans la cavité fermée jusqu'à deux points de sortie appropriés.

Dans le cas d'un matériau caoutchouteux, le moule de réalisation de l'insert peut être similaire à celui décrit dans la demande EP 1 000 774 A1.

## Revendications

1. Insert de sécurité (3) comportant :
- une base (8) sensiblement circonférentielle destinée à venir en contact avec une jante (2) de roue adaptée,
- un corps (9) sensiblement circonférentiel destiné à supporter une bande de roulement d'un pneumatique (1) monté sur ladite jante lors d'un roulage avec une pression susceptible d'occasionner un affaissement au moins partiel d'une portion dudit pneumatique, et
- un logement (19) destiné à recevoir un module de roue (20) à transmission radio,
**caractérisé en ce que**, ledit module de roue (20) comportant un émetteur radio (25) connecté à une bobine de couplage magnétique (21), ledit insert de sécurité (3) comporte une antenne (14) solidaire dudit insert (3) disposée à l'intérieur de son volume et comportant une bobine de couplage magnétique (15) disposée dans ledit insert de sécurité à proximité dudit logement (19) dudit module de roue.

2. Insert de sécurité (3) selon la revendication 1, dans lequel ladite antenne (14) est une antenne accordée de haut rendement.

3. Insert de sécurité (3) selon la revendication 2, dans lequel l'antenne (14) s'étend sur une fraction de la circonférence de l'insert.

4. Insert de sécurité (3) selon la revendication 2, dans lequel l'antenne (14) s'étend sur l'ensemble de la circonférence de l'insert.

5. Insert de sécurité (3) selon l'une des revendications 1 à 4, dans lequel, ledit corps annulaire (9) ayant une partie de diamètre supérieur au diamètre maximum de la roue destinée à recevoir l'insert, ladite antenne est disposée, pour sa plus grande part, à l'intérieur de cette partie supérieure dudit corps annulaire.

6. Insert de sécurité (3) selon la revendication 5, dans lequel ladite antenne (14) est fixée dans une gorge annulaire (13) ménagée dans une paroi latérale de la partie supérieure de l'insert.

7. Insert de sécurité selon la revendication 5, dans lequel ladite antenne (14) est noyée dans le corps annulaire (9) dudit insert.

8. Insert de sécurité (3) selon l'une des revendications 1 à 7, dans lequel la bobine de couplage (15) de l'antenne (14) est noyée dans la base (8) dudit insert.

9. Insert de sécurité (3) selon l'une des revendications 1 à 8, dans lequel ladite antenne (14) et ladite bobine de couplage (15) de l'antenne sont constituées par un seul fil conducteur.

10. Insert de sécurité (3) selon l'une des revendications 1 à 8, dans lequel ladite antenne (14) est réalisée, au moins en partie, par l'application sur la surface dudit insert d'une peinture conductrice.

11. Insert de sécurité (3) selon l'une des revendications 1 à 10, dans lequel ladite antenne (14) est réalisée avec un conducteur souple.

12. Insert de sécurité (3) selon l'une des revendications 1 à 11, dans lequel le logement (19) dudit module de roue (20) est disposé dans le corps annulaire à proximité immédiate de la base (8) dudit insert.

13. Module de roue (20), destiné à être disposé dans un logement (19) à l'intérieur d'un insert de sécurité (3) comportant une base (8) sensiblement circonférentielle destinée à venir en contact avec une jante (2) de roue adaptée, un corps (9) sensiblement circonférentiel destiné à supporter une bande de roulement d'un pneumatique (1) monté sur ladite jante lors d'un roulage avec une pression susceptible d'occasionner un affaissement au moins partiel d'une portion dudit pneumatique, ledit module (20) comportant un élément (23) susceptible de détecter ou de lire un paramètre physique de la roue ou du pneumatique, tel un capteur de pression, et un émetteur (25) connecté électriquement à une bobine de couplage magnétique (21) adaptée pour coopérer électriquement. avec une antenne (14) disposée dans ledit insert.

14. Module de roue (20) selon la revendication 14, coopérant électriquement avec un élément d'alimentation électrique (22).

## Patentansprüche

1. Sicherheitseinsatz (3), der aufweist:
- eine im wesentlichen periphere Basis (8), die dazu bestimmt ist, mit einer dementsprechend ausgelegten Radfelge (2) in Kontakt zu kommen,
- einen im wesentlichen peripheren Körper (9), der eine Lauffläche eines auf die Felge montierten Luftreifens (1) beim Fahren mit einem Druck tragen soll, der ein zumindest teilweises Zusammensacken eines Abschnitts des Luftreifens bewirken kann, und
- einen Sitz (19), der dazu bestimmt ist, einen Radmodul (20) mit Funkübertragung aufzunehmen,
**dadurch gekennzeichnet, dass** der Radmodul (20) einen Funkemitter (25) aufweist, der mit einer magnetischen Koppelspule (21) verbunden ist, wobei der Sicherheitseinsatz (3) eine mit dem Einsatz (3) fest verbundene Antenne (14), die innerhalb seines Volumens angeordnet ist, und eine magnetische Koppelspule (15) aufweist, die im Sicherheitseinsatz in der Nähe des Sitzes (19) des Radmoduls angeordnet ist.

2. Sicherheitseinsatz (3) nach Anspruch 1, bei dem die Antenne (14) eine abgestimmte Antenne mit hohem Wirkungsgrad ist.

3. Sicherheitseinsatz (3) nach Anspruch 2, bei dem die Antenne (14) sich über einen Teil des Umfangs des Einsatzes erstreckt.

4. Sicherheitseinsatz (3) nach Anspruch 2, bei dem die Antenne (14) sich über den ganzen Umfang des Einsatzes erstreckt.

5. Sicherheitseinsatz (3) nach einem der Ansprüche 1 bis 4, bei dem der ringförmige Körper (9) einen Durchmesserbereich aufweist, der größer ist als der maximale Durchmesser des zur Aufnahme des Einsatzes bestimmten Rads, wobei die Antenne zum größten Teil im Inneren dieses größeren Bereichs des ringförmigen Körpers angeordnet ist.

6. Sicherheitseinsatz (3) nach Anspruch 5, bei dem die Antenne (14) in einer ringförmigen Rille (13) befestigt ist, die in einer Seitenwand des oberen Teils des Einsatzes ausgebildet ist.

7. Sicherheitseinsatz nach Anspruch 5, bei dem die Antenne (14) in den ringförmigen Körper (9) des Einsatzes versenkt ist.

8. Sicherheitseinsatz (3) nach einem der Ansprüche 1 bis 7, bei dem die Koppelspule (15) der Antenne (14) in die Basis (8) des Einsatzes versenkt ist.

9. Sicherheitseinsatz (3) nach einem der Ansprüche 1 bis 8, bei dem die Antenne (14) und die Koppelspule (15) der Antenne aus einem einzigen Leiterdraht bestehen.

10. Sicherheitseinsatz (3) nach einem der Ansprüche 1 bis 8, bei dem die Antenne (14) zumindest zum Teil durch Auftragen einer leitenden Farbe auf die Oberfläche des Einsatzes hergestellt wird.

11. Sicherheitseinsatz (3) nach einem der Ansprüche 1 bis 10, bei dem die Antenne (14) mit einem biegsamen Leiter hergestellt wird.

12. Sicherheitseinsatz (3) nach einem der Ansprüche 1 bis 11, bei dem der Sitz (19) des Radmoduls (20) im ringförmigen Körper in der direkten Nähe der Basis (8) des Einsatzes angeordnet ist.

13. Radmodul (20), der dazu bestimmt ist, in einem Sitz (19) innerhalb eines Sicherheitseinsatzes (3) angeordnet zu werden, der eine im wesentlichen periphere Basis (8), die dazu bestimmt ist, mit einer dementsprechend ausgelegten Radfelge (2) in Kontakt zu kommen, und einen im wesentlichen peripheren Körper (9) aufweist, der eine Lauffläche eines auf die Felge montierten Luftreifens (1) beim Fahren mit einem Druck tragen soll, der ein zumindest teilweises Zusammensacken eines Abschnitts des Luftreifens bewirken kann, wobei der Modul (20) ein Element (23), das in der Lage ist, einen physikalischen Parameter des Rads
oder des Luftreifens zu erfassen oder zu lesen, wie zum Beispiel einen Druckmessfühler, und einen Emitter (25) aufweist, der elektrisch mit einer magnetischen Koppelspule (21) verbunden ist, die ausgelegt ist, um elektrisch mit einer im Einsatz angeordneten Antenne (14) zusammenzuwirken.

14. Radmodul (20) nach Anspruch 14, der mit einem Stromversorgungselement (22) zusammenwirkt.

## Claims

1. Safety insert comprising:
• a substantially circumferential base (8) intended to come into contact with an adapted wheel rim (2),
• a substantially circumferential body (9) intended to support a tread of a tyre (1) mounted on the rim during rolling with a pressure capable of bringing about at least partial flattening of a portion of the tyre, and
• a housing (19) intended to receive a wheel unit (20) with radio transmission,
**characterised in that**, since the wheel unit (20) comprises a radio transmitter (25) connected to a magnetic coupling coil (21), the safety insert (3) comprises an aerial (14) rigidly connected to the insert (3) which is disposed inside its volume and which comprises a magnetic coupling coil (15) disposed in the said safety insert close to the housing (19) of the wheel unit.

2. Safety insert (3) according to claim 1, wherein the aerial (14) is a high-output tuned aerial.

3. Safety insert (3) according to claim 2, wherein the aerial (14) extends over a fraction of the circumference of the insert.

4. Safety insert (3) according to claim 2, wherein the aerial (14) extends over the entire circumference of the insert.

5. Safety insert (3) according to one of claims 1 to 4, wherein, since the annular body (9) has a part of a diameter larger than the maximum diameter of the wheel intended to receive the insert, the aerial is disposed, for its most part, inside this upper part of the annular body.

6. Safety insert (3) according to claim 5, wherein the aerial (14) is fixed in an annular groove (13) formed in a lateral wall of the upper part of the insert.

7. Safety insert according to claim 5, wherein the aerial (14) is immersed in the annular body (9) of the insert.

8. Safety insert (3) according to one of claims 1 to 7, wherein the coupling coil (15) of the aerial (14) is immersed in the base (8) of the insert.

9. Safety insert (3) according to one of claims 1 to 8, wherein the aerial (14) and the coupling coil (15) of the aerial are formed by a single conducting wire.

10. Safety insert (3) according to one of claims 1 to 8, wherein the aerial (14) is formed, at least in part, by applying a conductive paint to the surface of the insert.

11. Safety insert (3) according to one of claims 1 to 10, wherein the aerial (14) is formed with a flexible conductor.

12. Safety insert (3) according to one of claims 1 to 11, wherein the housing (19) of the wheel unit (20) is disposed in the annular body with immediate proximity to the base (8) of the insert.

13. Wheel unit (20), intended to be disposed in a housing (19) inside a safety insert (3) comprising a substantially circumferential base (8) intended to come into contact with an adapted wheel rim (2), and comprising a substantially circumferential body (8) intended to support a tread of a tyre (1) mounted on the rim during rolling with a pressure capable of causing at least partial flattening of a portion of the tyre, the unit (20) comprising an element (23) capable of detecting or reading a physical parameter of the wheel or tyre, such as a pressure sensor, and a transmitter (25) connected electrically to a magnetic coupling coil (21) adapted to co-operate electrically with an aerial (14) disposed in the insert.

14. Wheel unit (20) according to claim 14, co-operating electrically with an electric power element (22).
